# FASCICULE DE BREVET EUROPEEN

(11) **EP 0 625 442 B1**
(45) Date de publication et mention de la délivrance du brevet: **25.09.1996**
(21) Numéro de dépôt: 94500088.3
(22) Date de dépôt: 18.05.1994
(51) Int. Cl.: B60J 7/06

(54) **Dispositif coulissant pour bâches de camions**
Gleitvorrichtung für Lastkraftwagenplane
Sliding device for tarpaulin of transport vehicle

(30) Priorité: 20.05.1993 ES 9301393 U
(43) Date de publication de la demande: 23.11.1994
(73) Titulaire: ADAICO, S.L., Pamplona (Navarra) (ES)
(72) Inventeur: Zugaza, Juan Manuel, 31007 Pamplona(Navarra) (ES)
(74) Mandataire: Urizar Barandiaran, Miguel Angel

(56) Documents cités:
- EP-A- 0 444 733
- DE-A- 1 430 628

## Description

La présente invention traite d'un dispositif coulissant pour bâches de camions.

Dans les dispositifs ayant cours actuellement les efforts de repliement/dépliement ne se distribuent pas régulièrement sur chacun des coulisseaux, ce qui fait qu'on a tendance à voir les roues des coulisseaux se coincer, le roulement de ces roues n'étant pas celui, correct, que l'on en attend.

Un dispositif permettant d'obtenir un roulement correct est divulgué dans le document DE-A-1430628. En effet, ce document décrit: un dispositif coulissant pour bâches de camions, utilisant des rails de guidage le long desquels se déplacent des coulisseaux à roues. Chaque rail de guidage comporte deux mortaises-rail identiques, symétriquement disposées de part et d'autre d'un premier plan médian perpendiculaire à la direction commune des axes des roues, chacune des mortaises-rail définissant deux pistes de roulement. Chaque coulisseau comporte un support-base pourvu de deux paires de roues disposées en symétrie par rapport au premier et au deuxième plans médians.

La présente invention préconise un nouveau type de dispositif coulissant dans le quel chaque piste de roulement a une configuration polyédrique, définissant plusieurs zones de roulement et apte à définir un logement approximativement conjugué au profil des roues (R) qui s'y déplacent, les pistes de roulement d'une même mortaise-rail étant symétriques l'une de l'autre par rapport au troisième plan médian.

On assure, grâce à cette structuration, un déplacement parfait (à frottement minime) des coulisseaux dans les rails de guidage indépendamment de la position de travail relative qu'adoptent ces éléments lorsque les roues (R) se déplacent par l'une (R1) ou les autres (R2), (R3) pistes de roulement définies par les zones correspondantes.

La figure 1 représente une section générale de profil longitudinal du dispositif de coulisseau pour bâches de camions, selon l'invention.

La figure 2 représente une vue en plan correspondant à la figure antérieure, sur laquelle on a représenté en pointillés le rail (2) et, dans un souci de plus grande clarté d'interprétation, les haubans (3) -qui relient entre eux les coulisseaux (1) d'un même côté-et traverse (4) -reliant entre eux un coulisseau(1) d'un coté à un coulisseau (1) situé du côté opposé.

La figure 3 représente un détail schématique, très agrandi, correspondant à la figure 1 sur laquelle on a signalé les pistes de roulement (R1), (R2), (R3) auto-utilisées selon l'invention par le dispositif.

Le dispositif coulissant pour bâches de camions, selon l'invention, peut adopter n'importe quelle position angulaire de travail et comporte, notamment, des rails de guidage (2) sur lesquels peuvent se déplacer toute une série de coulisseaux (1).

Les coulisseaux (1) et les rails de guidage (2) présentent la même configuration, pouvant etre employés en nombre différent -les coulisseaux (1)- et sur des longueurs différentes-pour les rails-guide (2)- en fonction de chaque application concrète, sans qu'en soit altérée pour autant l'essence de l'invention.

Chaque coulisseau (1), conformément à l'invention et suivant la réalisation représentée, comporte un support de base (11) pouvu de formes et/ou moyens servant à monter:
a) des haubans (3), lesquels relient entre eux les coulisseaux (1) consécutifs d'un même côté-qui se déplacent sur un même rail (2)-;
b) une traverse (4) que relie entre eux les coulisseaux (1) de côtés contraires se déplaçant sur des rails (2) opposés-;
c) des paires de roues (R), par lesquelles les coulisseaux (1) se déplacent sur les rails de guidage (2).

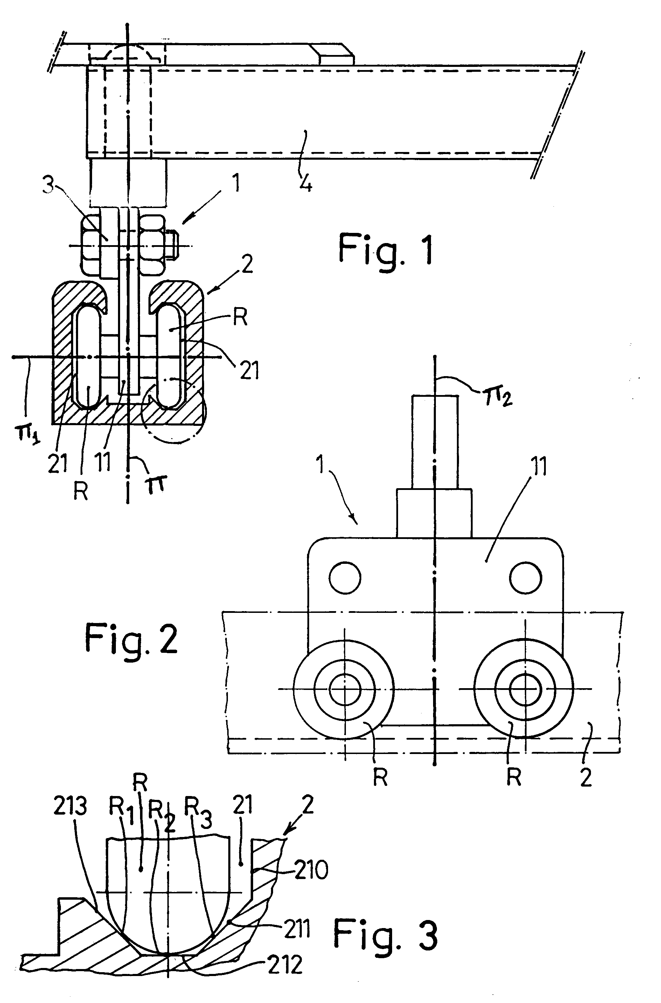

Chaque coulisseau (1) en particulier comporte deux paires de roues (R) diposées en symétrie totale par rapport au support (11), aussi bien par rapport à ses faces -plan (TT) de la figure (1)- que par rapport à une même face-plan (TT2) de la figure 2-.

Chaque rail de guidage (2) -conformément à l'invention, et selon la réalisation représentée comporte deux mortaises-rail (21) identiques distribuées symétriquement disposées par rapport à un plan central -plan (TT) de la figure 1-.

Chaque mortaise-rail (21) présente à son tour une configuration symétrique par rapport à un plan transversal (TT1) -orthogonal par rapport au précédent (TT)-, avec plusieurs zones (211), (212), (213) successivees, angulées aussi bien entre elles que par rapport à leur paroi de fond (210) et aptes à se constituer en pistes de roulement, afin de définir des logements très appoximativement conjugués au profil des roues (R) qui s'y déplacent.

On assure, grâce à cette structuration, un déplacement parfait (à frottement minime) des coulisseaux (1) dans les rails de guidage (2) indépendamment de la position de travail relative qu'adoptent ces éléments lorsque les roues (R) se déplacent par l'une (R1) ou les autres (R2), (R3) pistes de roulement définies par les zones correspondantes (211), (212), (213).

## Revendications

1. Dispositif coulissant pour bâches de camions, utilisant des rails de guidage (2) le long desquels se déplacent des coulisseaux (1) à roues (R), chaque coulisseau (1) comportant un support-base (11) pourvu de deux paires de roues (R),
chaque paire de roue étant telle que ses roues ont un axe commun et sont disposées symétriquement par rapport à un premier plan médian (TT) perpendiculaire à cet axe commun,
les paires de roues (R) ayant toutes le même premier plan médian (TT),
les paires de roues (R) étant disposées symétriquement de part et d'autre d'un deuxième plan médian (TT2), perpendiculaire au premier plan médian (TT) et à un troisième plan médian (TT1) contenant les axes communs de la première et de la deuxième paire de roues (R),
chaque rail de guidage (2) comportant deux mortaises-rail (21) identiques, symétriquement disposées de part et d'autre dudit premier plan médian (TT), chacune des motaises-rail définissant deux pistes de roulement disposées de part et d'autre dudit troisième plan médian (TT1),
le dispositif se caractérisant par le fait que:
chaque piste de roulement a une configuration polyédrique, définissant plusieurs zones de roulement (211, 212, 213) et apte à définir un logement approximativement conjugué au profil des roues (R) qui s'y déplacent, les pistes de roulement d'une même mortaise-rail étant symétriques l'une de l'autre par rapport au troisième plan médian (TT1).

## Claims

1. A sliding device for lorry canopies, which uses guide-rails (2) along which the slides (1) with wheels (R) move, with each slide (1) being made up of a supporting base (11) with two pairs of wheels (R), and each air of wheels made up in such a way that its component wheels have a common axle and are arranged symmetrically about a first central plane (TT) perpendicular to the said common axle,
with all the pairs of wheels (R) having the same first intermediate plane (TT),
with the pairs of wheels (R) arranged on both sides of a second intermediate plane (TT2) perpendicular to the first intermediate plane (TT) and to a third intermediate plane (TT1) containing the common axles of the first and second pair of wheels (R), with the said guide rail (2) supporting two identical rail mortises (21) symmetrically arranged on either side of the said first intermediate plane (TT), with each rail mortise defining two raceways arranged on either side of the said third intermediate pane (TT1).
with the device being characterized by the fact that:
each raceway has a polyhedral configuration which defines several raceways (211, 212, 213) and is capable of defining a housing approximately along the profile of the wheels (R) which move on it, with the raceways of the same rail mortise being symmetrical to each other with respect to the third intermediate plane (TT1).

## Patentansprüche

1. Gleitvorrichtung für LKW-Planen unter Einsatz einer Führungsschiene, an der mit Laufrädern (R) versehene Kulissen (1) entlanggleiten. Jede Kulisse (2) ist mit einer mit zwei Räderpaaren (R) bestücktten Auflageplatte (11) ausgerüstet, jedes Räderpaar ist so ausgelegt, daß die Räder eine gemeinsame Achse besitzen und symmetrisch zu einer ersten Mittelebene (TT) und senkrecht zu der genannten gemeinsamen Achse angeordnet sind,
alle Räderpaare (R) besitzen die gleiche Mittelebene (TT), die Räderpaare (R) sind symmetrisch zu beiden Seiten einer zweiten Mittelebene (TT2) senkrecht zur ersten Mittelebene (TT) sowie zu einer dritten Mittelebene (TT1) angeordnet, die die gemeinsamen Achsen des ersten und zweiten Räderpaars (R) enthalten,
jede Führungsschiene (2) erhält zwei gleiche Schienenauflager (21), die symmetrisch zu beiden Seiten der ersten Mittelachse (TT) angeordnet sind, wobei jedes Schienenauflager zwei auf beiden Seiten der genannten Mittelebene (TT1) angeordnete Laufflächen definiert,
die Vorrichtung ist dadurch gekennzeichnet, daß:
jede Lauffläche polyedrisch ausgebildet ist, wodurch mehrere Laufbereiche (211, 212, 213) definiert werden. Gleichzeitig wird dadurch eine annähernd dem Profil der dort entlanggleitenden Räder (R) angepaßte Lagerung definiert. Die Laufflächen ein und desselben Schienenauflagers liegen symmetrisch zur dritten Mittelebene (TT1).
